# EUROPEAN PATENT SPECIFICATION

(11) **EP 1 520 483 B1**
(45) Date of publication and mention of the grant of the patent: **08.09.2010**
(21) Application number: 04077752.6
(22) Date of filing: 04.10.2004
(51) Int. Cl.: A23L 1/00, A23P 1/16, A47J 31/44, B05B 7/00

(54) **Method and apparatus for forming gas bubbles in a liquid product**
Verfahren und Vorrichtung zur Bildung von Gasblasen in einer Flüssigkeit
Procédé et dispositif de formation des bulles de gaz dans un produit liquide

(30) Priority: 02.10.2003 NL 1024438
(43) Date of publication of application: 06.04.2005
(73) Proprietor: Friesland Brands B.V., 7943 PE Meppel (NL)
(72) Inventor: Poortinga, Albert Thijs, 7422 LN Deventer (NL); Koman-Boterblom, Hendrika, 7421 EZ Deventer (NL); Wijnen, Maria E., 7425 GS Deventer (NL)
(74) Representative: Winckels, Johannes Hubertus F.

(56) References cited:
- WO-A-01/36105
- WO-A-01/62392
- WO-A-89/02221
- DE-U- 20 105 711
- GB-A- 2 304 523
- GB-A- 2 390 984
- US-A- 3 810 415
- US-A- 4 834 343
- US-A- 5 451 104
- US-A- 6 099 878
- US-A1- 2003 089 244
- US-B1- 6 322 610

## Description

The invention relates to a method for forming gas bubbles and in particular stable gas bubbles in a liquid food product to obtain an edible foam. In addition, the invention relates to an apparatus for carrying out such a method.

Such methods are known from practice. The known methods are suitable, for instance, for producing a foam and/or an airy product. In these known methods, the starting material is a liquid product and in particular a protein-containing liquid product, in which a gas is incorporated. This gas is, for instance, a gas that is poorly soluble in the product. The gas and the protein-containing product are introduced into a mixing space and mixed, for instance by vigorous blending and/or whipping, in such a way that the gas bubbles referred to are formed in the product.

US-A-6 099 878 is directed to a fully automatic espresso coffee machine, in which milk from a milk supply is injected with air and subsequently pumped toward a steam line in order to form foamed milk.

US-A-3 810 415 describes a static-type whipping apparatus for whipping food materials. Liquid material is mixed with injected gas in an expansion chamber.

WO-A-01/36105 is directed to a micro-bubble generating nozzle. Pressurised liquid is introduced into a bubble generating space and mixed with an introduced gas.

DE-U-201 05 711 describes a nozzle for foaming, spraying or fogging a flowable medium. The nozzle comprises a space in which a liquid medium discharged by a first channel and a gaseous medium is discharged by a second channel.

US-A-4 834 343 describes a method, in which a gas and a liquid are introduced into a column. The gas is dispersed into the liquid in the form of bubbles, and the mass of liquid and gas bubbles is rotated around the central axis of the column.

US-A-5 451 104 describes a method and apparatus for producing foam, in which a foamable medium is mixed with a gaseous medium in a mixing chamber past a porous mixing chamber partition wall.

US-A-2003/0 089 244 describes an assembly for generating milk foam comprising a milk supply container, a steam generator and a mixing element. The mixing element has a central main channel whose inlet communicates with a necking and downstream thereof with a milk inlet channel. A second steam inlet channel opens into the main channel between the necking and the milk inlet channel.

WO-A-01/62392 is directed to a improved nozzle assembly for a sparging system. The sparger nozzle assembly comprises a nozzle having a converging-diverging section.

US-B-6 322 610 is directed to an integrated device to inject oxygen, technological gases and solid material in powder forming a furnace used in steel and metallurgical melting processes.

GB-A-2 304 523 describes a method of whipping cream and mousses. A quantity of a gas is whipped into a cream or mousse by means of a screw.

In a preferred embodiment which is described in detail in the Dutch patent application 1024435 which has been filed at the same date as the present application, the product is subsequently heated, so that proteins on the surface of the bubbles denature and crosslink. When the bubbles presently shrink, the crosslinked protein layers on the bubble surface become tensioned, such that shrinkage stops. In this way, bubbles have been formed which are stable for a very long time (i.e. whose size remains constant in time). Such shrinkage occurs spontaneously in a part of the bubbles as a result of so-called Ostwald ripening, but is preferably promoted by making bubbles which consist partly of steam, which bubbles shrink as a result of condensation of the steam. This preferred method is incorporated into the present description by reference.

The product is in particular a food, which is for instance pourable and/or drinkable. In that case, with the gas bubbles formed, an improved taste sensation can be achieved. Moreover, the food can thus have a relatively low fat content while preserving a desired creamy taste sensation.

The number of gas bubbles and the average gas bubble size appear to have an important influence on sensory properties of the food, for instance creaminess, freshness, softness or airiness. Of the gas bubbles formed with the known method, only a part proves to be sufficiently stable in the liquid products to be able to maintain themselves in the product for a longer time. Another part of the gas bubbles proves to coarsen strongly within a day. In fluid products, this subsequently leads to creaming and hence the disappearance of the bubbles. The latter, instable, bubbles moreover prove each to have a relatively great diameter, so that these bubbles contain relatively much of the gas supplied. The known method is therefore little efficient. A possible explanation of the fact that only small bubbles and typically bubbles having a size of between 5 and 30 µm are stable to shrinkage, is that the protein layer in this case is comparatively stronger. The larger, unstable bubbles will therefore still exhibit Ostwald ripening with respect to each other, so that much gas is lost via thus formed, large, creaming bubbles.

The object of the present invention is to eliminate the disadvantages of the known methods while maintaining the advantages thereof. In particular, the object of the invention is to provide a method with which a relatively large number of stable gas bubbles can be formed in the product.

According to the invention, to that end, the method is characterized in that different gas beams, and preferably gas beams consisting of a mixture of steam and a non-condensing gas, are spouted into the product, at least one of the gas beams being spouted into the product at a supersonic speed.

Surprisingly, it has been found that in this way, a relatively large number of stable gas bubbles can be formed. This can be explained in that the different gas beams jointly have a relatively large mixing surface to mix with the product. According to a simple further elaboration, at least one gas beam is spouted into the product via a beam divider. The beam divider can for instance be provided with passages, in particular pores, having diameters of less than about 1 mm, in order for different narrow gas beams to be formed which have a large mixing surface. The beam divider can for instance comprise a membrane, such as a metal or ceramic membrane or a similar permeable material, which has been found to give very good results. By the use of the beam divider, in a simple manner, a large number of partial beams can be generated for the purpose of a thorough mixing with the liquid product. Injected beams break up into bubbles. In the preferred embodiment where steam is used, the bubbles subsequently shrink through condensation of the steam.

As stated, it is particularly advantageous according to the invention if the gas beams comprise at least a condensing gas, such as steam, and a gas poorly soluble in the product.

Surprisingly, it has been found that a relatively large number of stable gas bubbles are formed by injecting gas beams of such a composition, significantly more than when use is made of just one beam. Probably, the use of several beams leads to the formed bubbles being covered better with proteins, because of the larger contact surface between gas and product. Possibly, the use of several beams leads to a more efficient breaking up of the beams into bubbles. Preferably, a relatively large part of the gas bubbles shrink after the gas injection to diameters of less than about 100 µm, in particular of less than about 50 µm. Such small gas bubbles have been found to have a relatively long life.

The invention further provides an apparatus for forming gas bubbles in a liquid product, in particular according to a method according to the invention, the apparatus being provided with a mixing space (3) to mix the product with gas, the apparatus comprising spouting means (1, 4) to spout different gas beams into the mixing space (3), at least one of the spouting means being adapted to spout a gas beam into the product at a supersonic mixing speed.

This apparatus is particularly suitable to carry out the method according to the invention, which provides the above-mentioned advantages.

A food prepared with a method according to any one of claims 1-12 and/or utilizing an apparatus according to any one of claims 13-24 contains a large number of stable gas bubbles, which imparts good sensory properties to the food, for instance in the areas of taste, creaminess, freshness, softness, airiness.

Presently, the invention will be clarified on the basis of an exemplary embodiment and the drawing, in which:

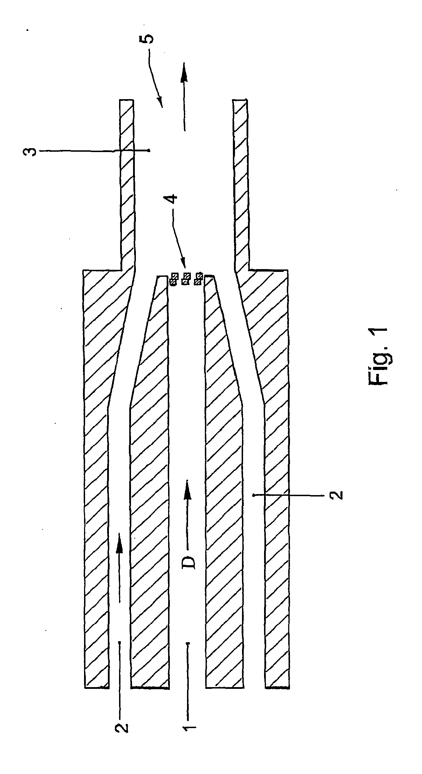

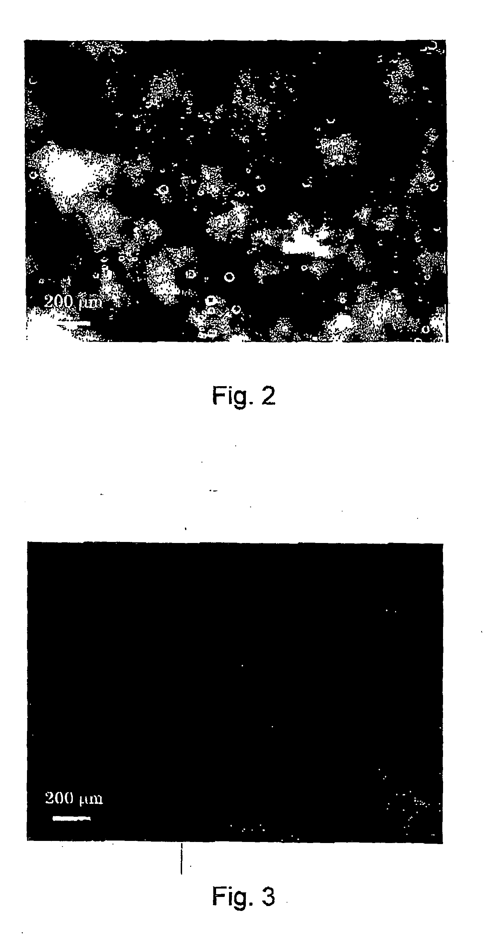

Fig. 1 shows a schematically represented exemplary embodiment of the invention;

Figure 1 shows a longitudinal cross section of a part of an apparatus for forming gas bubbles in a liquid product. The apparatus is provided with a mixing space 3 to mix the product with gas. The apparatus further comprises spouting means 1, 4 to spout different gas beams into the mixing space 3. These spouting means comprise in particular a steam injector 1. The steam injector comprises a steam supply channel 1 which terminates in the mixing chamber 3. The apparatus further comprises a product supply channel 2 which terminates, separately from the steam supply channel 1, in the mixing chamber 3. As Fig. 1 shows, the product supply channel 2 extends around the steam supply channel 1, at least adjacent the mixing chamber 3. Downstream of the steam injector 1 and product supply 2, viewed in a flow direction D, there is provided a product discharge 5, coupled to the mixing space 3, for discharging the product from the mixing space 3 during use, preferably continuously so.

The steam supply channel 1 is provided at a downstream end with a beam divider in the form of a membrane 4. The membrane 4 is arranged to divide a steam beam supplied via the steam supply channel 1 into a large number of fine partial beams and to spout these as such into the mixing chamber 3. To that end, the membrane comprises different gas passages or pores, which for instance have a diameter of less than about 1 mm. Preferably, the pores have relatively small diameters, for instance in the range of about 1-500 µm, preferably in the range of 10-400 µm, in particular in the range of 50-200 µm, so that a relatively large number of fine partial beams can be generated with the membrane 4.

During use, the liquid product is supplied via the product supply 2 to the mixing space 3. The steam injector 1 is coupled to a steam generator, not shown, arranged to supply a steam beam to the steam injector 1. Upstream of the mixing chamber 3, for instance in the steam generator and/or in the steam supply channel 1, a gas relatively poorly soluble in the product is added to the steam. The mixture of steam and poorly soluble gas is subsequently spouted by the steam injector 1 via the membrane 4 at a particular mixing speed into the mixing space 3 to be mixed with the product.

The composition of the product and the gas mixture, as well as process parameters such as the temperature, pressure, and gas mixing speed, are such that mixing is accompanied by the formation of the stable gas bubbles. To that end, the product can for instance contain protein or protein mixture.

The above-mentioned mixing speed evidently depends *inter alia* on the diameter of pores of the membrane 4, the steam pressure in the steam injector 1 and the mixing chamber pressure. The skilled person can simply obtain a speed suitable for bubble formation through variation of the pore diameters and the pressures mentioned. The mixing chamber pressure can be, for instance, in the range of about 1-2 bars, the steam pressure in the steam supply channel 1 is for instance in the range of 1-10 bars. Evidently, also other pressures and dimensions can be used to obtain a suitable mixing speed of the gas mixture.

What is effected by the membrane 4 is that a large number of fine partial beams are spouted into the product. As a result, in the mixing space 3, a mixing of the product with the gas mixture takes place, such that a large number of stable gas bubbles are formed in the product. Moreover, the product is heated by the steam-containing gas mixture. This is particularly advantageous in a protein-containing product, since the protein can undergo denaturation under the influence of the heating, which strengthens the gas bubbles. After the mixing, the steam condenses, which leads to a desired advantageous reduction of gas bubbles formed.

Various modifications are possible within the framework of the invention such as it is set forth in the appended claims.

Thus, the product can for instance comprise a protein solution which may or may not be edible. An edible protein solution can for instance comprise a milk protein, a whey protein and casein, egg white proteins, yeast isolate, soy protein, hemoglobin, plant protein isolate, meat protein, collagen, gelatin and the like.

The product can further contain various substances, for instance a thickener, fat, colorings, flavorings, sweeteners and the like.

Furthermore, the product is in particular a food, for instance a beverage, soft drink, yoghurt drink, or the like.

The liquid product can further contain solid substances to be added to the product.

Further, the condensing gas and gas poorly soluble in the product can be injected into the product via the same injection channel or via different injectors.

In addition, one or more condensing gases and/or one or more gases poorly soluble in the product can be used.

Furthermore, for instance a dispersing device, in particular an in-line turrax, can be arranged downstream of the gas mixture injector 1, which has been found to further increase the produced fraction of stable gas bubbles.

A supersonic speed has been found to be very advantageous, since at such a high speed, relatively many stable gas bubbles prove to be formed. To that end, the apparatus is provided with different supersonic nozzles.

## Claims

1. A method for forming gas bubbles in a liquid food product to obtain an edible foam, **characterized in that** different gas beams are spouted into the product, at least one of the gas beams being spouted into the product at a supersonic mixing speed.

2. A method according to claim 1, wherein said gas beams contain at least a condensing gas and a gas poorly soluble in the product.

3. A method according to claim 2, wherein the condensing gas comprises steam.

4. A method according to claim 2 or 3, wherein said gas beams contain at least 1%, in particular at least 10%, of gas poorly soluble in the product, which percentages are percentages by volume, based on the volume of the total product.

5. A method according to any one of claims 2-4, wherein the gas poorly soluble in the product comprises an inert gas, in particular nitrogen.

6. A method according to any one of the preceding claims, wherein at least one gas beam is spouted into the product via a beam divider (4).

7. A method according to claim 6, wherein the beam divider (4) is provided with passages, in particular pores, having diameters of less than 1 mm.

8. A method according to claim 6 or 7, wherein the beam divider comprises a membrane (4).

9. A method according to any one of the preceding claims, wherein at least one of said gas beams has a treatment temperature in the range of 50-150°C.

10. A method according to any one of the preceding claims, wherein the product contains at least one protein or protein mixture.

11. An apparatus for forming gas bubbles in a liquid product, in particular according to a method of any one of the preceding claims, wherein the apparatus is provided with a mixing space (3) to mix the product with gas, the apparatus comprising spouting means (1, 4) to spout different gas beams into the mixing space (3), at least one of the spouting means being adapted to spout a gas beam into the product at a supersonic mixing speed.

12. An apparatus according to claim 11, wherein the spouting means (1) are provided with at least one beam divider (4) to generate different gas beams from a gas beam supplied.

13. An apparatus according to claim 12, wherein said beam divider (4) is provided with different gas passages.

14. An apparatus according to claim 13, wherein each gas passage has a diameter of less than 1 mm.

15. An apparatus according to claim 14, wherein said gas passages have diameters in the range of 10-500 µm, in particular in the range of 20-200 µm.

16. An apparatus according to any one of claims 12-15, wherein the beam divider comprises a membrane (4).

17. An apparatus according to any one of claims 12-16, wherein the beam divider (4) extends substantially along or near the mixing space (3).

18. An apparatus according to any one of claims 11-17, wherein the apparatus is provided with a product supply (2) which terminates in the mixing space (3).

19. An apparatus according to any one of claims 11-18, provided with a product supply coupled to the mixing space (3).

20. An apparatus according to any one of claims 11-19, wherein the spouting means (1) comprise a steam injector.

21. An apparatus according to at least claim 11, wherein the apparatus is provided with supply means (1) to supply a gas poorly soluble in the product to said mixing space (3).

22. An apparatus according to claims 11 and 21, wherein said spouting means (1) comprise said supply means of a gas poorly soluble in the product.

## Patentansprüche

1. Verfahren zur Bildung von Gasblasen in einem flüssigen Nahrungsmittelprodukt, um einen essbaren Schaum zu erhalten, **dadurch gekennzeichnet, dass** verschiedene Gasstrahlen in das Produkt ausgestoßen werden, wobei wenigstens einer der Gasstrahlen mit einer Überschallmischgeschwindigkeit in das Produkt ausgestoßen wird.

2. Verfahren nach Anspruch 1, wobei die Gasstrahlen wenigstens ein kondensierendes Gas und ein Gas enthalten, das in dem Produkt schlecht löslich ist.

3. Verfahren nach Anspruch 2, wobei das kondensierende Gas Dampf enthält.

4. Verfahren nach Anspruch 2 oder 3, wobei die Gasstrahlen wenigstens 1%, vorzugsweise wenigstens 10%, Gas enthalten, das in dem Produkt schlecht löslich ist, wobei die Prozentangaben Volumenprozentangaben auf Basis des Volumens des gesamten Produktes sind.

5. Verfahren nach einem der Ansprüche 2 - 4, wobei das in dem Produkt schwer lösliche Gas ein Inertgas aufweist, insbesondere Stickstoff.

6. Verfahren nach einem der vorhergehenden Ansprüche, wobei wenigstens ein Gasstrahl über einen Strahlteiler (4) in das Produkt ausgestoßen wird.

7. Verfahren nach Anspruch 6, wobei der Strahlteiler (4) mit Durchgängen, insbesondere Poren, versehen ist, die Durchmesser von weniger als 1 mm haben.

8. Verfahren nach Anspruch 6 oder 7, wobei der Strahlteiler eine Membran (4) aufweist.

9. Verfahren nach einem der vorhergehenden Ansprüche, wobei wenigstens einer der Gasstrahlen eine Behandlungstemperatur in dem Bereich von 50 - 150°C hat.

10. Verfahren nach einem der vorhergehenden Ansprüche, wobei das Produkt wenigstens ein Protein oder ein Proteingemisch enthält.

11. Vorrichtung zur Bildung von Gasblasen in einem flüssigen Produkt, insbesondere gemäß einem Verfahren nach einem der vorhergehenden Ansprüche, wobei die Vorrichtung mit einem Mischraum (3) versehen ist, um das Produkt mit Gas zu mischen, wobei die Vorrichtung Ausstoßeinrichtungen (1, 4) aufweist, um verschiedene Gasstrahlen in den Mischraum (3) auszustoßen, wobei wenigstens eine der Ausstoßeinrichtungen dazu ausgestaltet ist, um einen Gasstrahl mit einer Überschallmischgeschwindigkeit in das Produkt auszustoßen.

12. Vorrichtung nach Anspruch 11, wobei die Ausstoßeinrichtungen (1) mit wenigstens einem Strahlteiler (4) versehen sind, um verschiedene Gasstrahlen aus einem zugeführten Gasstrahl zu erzeugen.

13. Vorrichtung nach Anspruch 12, wobei der Strahlteiler (4) mit verschiedenen Gasdurchgängen versehen ist.

14. Vorrichtung nach Anspruch 13, wobei jeder Gasdurchgang einen Durchmesser von weniger als 1 mm hat.

15. Vorrichtung nach Anspruch 14, wobei die Gasdurchgänge Durchmesser im Bereich von 10 - 500 µm, insbesondere in dem Bereich von 20 - 200 µm haben.

16. Vorrichtung nach einem der Ansprüche 12 - 15, wobei der Strahlteiler eine Membran (4) aufweist.

17. Vorrichtung nach einem der Ansprüche 12 - 16, wobei der Strahlteiler im Wesentlichen entlang oder nahe des Mischraums (3) verläuft.

18. Vorrichtung nach einem der Ansprüche 11 - 17, wobei die Vorrichtung mit einer Produktzufuhr (2) versehen ist, die in dem Mischraum (3) endet.

19. Vorrichtung nach einem der Ansprüche 11 - 18, die mit einer mit dem Mischraum (3) verbundenen Produktzufuhr versehen ist.

20. Vorrichtung nach einem der Ansprüche 11 - 19, wobei die Ausstoßeinrichtungen einen Dampfinjektor aufweisen.

21. Vorrichtung nach wenigstens Anspruch 11, wobei die Vorrichtung mit einer Zufuhreinrichtung (1) versehen ist, um dem Mischraum (3) Gas zuzuführen, das in dem Produkt schlecht löslich ist.

22. Vorrichtung nach Ansprüchen 11 und 21, wobei die Ausstoßeinrichtungen (1) die Zufuhreinrichtung für in dem Produkt schlecht lösliches Gas umfassen.

## Revendications

1. Procédé pour former des bulles de gaz dans un produit alimentaire liquide pour obtenir une mousse comestible, **caractérisé en ce que** différents faisceaux de gaz sont déversés dans le produit, au moins l'un des faisceaux de gaz étant déversé dans le produit à une vitesse de mélange supersonique.

2. Procédé selon la revendication 1, dans lequel lesdits faisceaux de gaz contiennent au moins un gaz de condensation et un gaz faiblement soluble dans le produit.

3. Procédé selon la revendication 2, dans lequel le gaz de condensation comprend de la vapeur.

4. Procédé selon la revendication 2 ou 3, dans lequel lesdits faisceaux de gaz contiennent au moins 1%, en particulier au moins 10% de gaz faiblement soluble dans le produit, lesquels pourcentages sont des pourcentages en volume, en fonction du volume du produit total.

5. Procédé selon l'une quelconque des revendications 2 à 4, dans lequel le gaz faiblement soluble dans le produit comprend un gaz inerte, en particulier de l'azote.

6. Procédé selon l'une quelconque des revendications précédentes, dans lequel au moins un faisceau de gaz est fait jaillir dans le produit via un diviseur de faisceau (4).

7. Procédé selon la revendication 6, dans lequel le diviseur de faisceau (4) est muni de passages, en particulier des pores, ayant des diamètres inférieurs à 1 mm.

8. Procédé selon les revendications 6 ou 7, dans lequel le diviseur de faisceau comprend une membrane (4).

9. Procédé selon l'une quelconque des revendications précédentes, dans lequel au moins l'un desdits faisceaux de gaz a une température de traitement de l'ordre de 50 à 150au.

10. Procédé selon l'une quelconque des revendications précédentes, dans lequel le produit contient au moins une protéine ou un mélange de protéines.

11. Appareil pour former des bulles de gaz dans un produit liquide, en particulier selon un procédé selon l'une quelconque des revendications précédentes, dans lequel l'appareil est muni d'un espace de mélange (3) pour mélanger le produit avec le gaz, l'appareil comprenant des moyens de déversement (1, 4) pour déverser différents faisceaux de gaz dans l'espace de mélange (3), au moins l'un des moyens de déversement étant adapté pour déverser un faisceau de gaz dans le produit à une vitesse de mélange supersonique.

12. Appareil selon la revendication 11, dans lequel les moyens de jaillissement (1) sont muni d'au moins un diviseur de faisceau (4) afin de générer différents faisceaux de gaz provenant d'un faisceau de gaz alimenté.

13. Appareil selon la revendication 12, dans lequel ledit diviseur de faisceau (4) est muni de différents passages de gaz.

14. Appareil selon la revendication 13, dans lequel chaque passage de gaz a un diamètre inférieur à 1 mm.

15. Appareil selon la revendication 14, dans lequel lesdits passages de gaz ont des diamètres de l'ordre de 10 à 500 µm, en particulier de l'ordre de 20 à 200 µm.

16. Appareil selon l'une quelconque des revendications 12 à 15, dans lequel le diviseur de faisceau comprend une membrane (4).

17. Appareil selon l'une quelconque des revendications 12 à 16, dans lequel le diviseur de faisceau (4) s'étend sensiblement le long de ou à proximité de l'espace de mélange (3).

18. Appareil selon l'une quelconque des revendications 11 à 17, dans lequel l'appareil est muni d'une alimentation de produit (2) qui se termine par l'espace de mélange (3).

19. Appareil selon l'une quelconque des revendications 11 à 18, muni d'une alimentation de produit couplée à l'espace de mélange (3).

20. Appareil selon l'une quelconque des revendications 11 à 19, dans lequel les moyens de déversement (1) comprennent un injecteur de vapeur.

21. Appareil selon au moins la revendication 11, dans lequel l'appareil est muni de moyens d'alimentation (1) pour alimenter un gaz faiblement soluble dans le produit audit espace de mélange (3).

22. Appareil selon les revendications 11 et 21, dans lequel lesdits moyens de jaillissement (1) comprennent des moyens d'alimentation d'un gaz faiblement soluble dans le produit.
